(19) Europäisches Patentamt
European Patent Office
Office européen des brevets

(11) EP 4 737 498 A1

(12) **EUROPEAN PATENT APPLICATION**

(43) Date of publication:
**06.05.2026 Bulletin 2026/19**

(21) Application number: **25211929.2**

(22) Date of filing: **29.10.2025**

(51) International Patent Classification (IPC):
***C08G 18/73*** *(2006.01)* ***C08G 18/79*** *(2006.01)*
***C09D 175/04*** *(2006.01)* ***C08G 18/06*** *(2006.01)*
***C08G 18/28*** *(2006.01)* ***C08G 18/62*** *(2006.01)*
***C08G 18/80*** *(2006.01)* ***C09D 175/14*** *(2006.01)*

(52) Cooperative Patent Classification (CPC):
**C08G 18/792; C08G 18/06; C08G 18/0814; C08G 18/2875; C08G 18/6216; C08G 18/6229; C08G 18/73; C08G 18/8064; C08G 18/807; C08G 18/8077; C08G 18/808; C09D 175/04; C09D 175/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.11.2024 JP 2024193117**

(71) Applicant: **Tosoh Corporation**
**Yamaguchi 746-8501 (JP)**

(72) Inventors:
- **NOGUCHI, Shuto**
**Yokkaichi-shi, 510-8540 (JP)**
- **YASUDA, Akihiro**
**Yokkaichi-shi, 510-8540 (JP)**

(74) Representative: **TBK**
**Bavariaring 4-6**
**80336 München (DE)**

(54) **MODIFIED BLOCKED POLYISOCYANATE, COATING COMPOSITION, COATING FILM, AND METHOD FOR FORMING A COATING FILM**

(57) A modified blocked polyisocyanate, which is a blocked polyisocyanate modified with a hydroxyl group-containing quaternary ammonium salt (I) represented by the following formula (I).

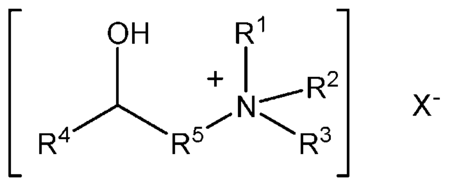

(I)

EP 4 737 498 A1

## Description

CROSS-REFERENCE TO RELATED APPLICATIONS

This application claims the benefit of priority from Japanese Patent Application No. 2024-193117, filed on November 1, 2024, the entire contents of which are incorporated herein by reference.

TECHNICAL FIELD

The present disclosure relates to a modified blocked polyisocyanate, a coating composition, a coating film, and a method for forming a coating film.

BACKGROUND

Conventionally, polyisocyanates have been known as curing agents used in coating materials and the like. For example, polyurethane resin coating materials that combine a polyol and a polyisocyanate are known to have very excellent abrasion resistance, chemical resistance, and stain resistance.

Coating materials that use a polyisocyanate as a curing agent are generally two-component compositions and include a base agent (e.g., a polyol) and a polyisocyanate. In two-component compositions, the base agent and the polyisocyanate are stored separately and are mixed for use at the time of coating. However, once mixed, the coating material cures in a short time, resulting in a short pot life, which has been a problem in terms of workability during coating. Furthermore, since polyisocyanates react easily with water, it has been impossible to use polyisocyanates in water-based coating materials such as electrodeposition coating materials.

As a way to address these problems, a method of inactivating a polyisocyanate by reacting it with a blocking agent is known. The blocked polyisocyanate obtained by this method does not react with a base agent such as a polyol at room temperature, but when heated, the blocking agent dissociates to regenerate isocyanate groups, which then react with the base agent to form cross-linking. Therefore, according to the above method, the pot life is not limited, it becomes possible to prepare a coating material by mixing the base agent and the curing agent in advance, and the application of polyisocyanates to water-based coating materials also becomes possible.

In coating materials that use a blocked polyisocyanate as a curing agent, a catalyst such as a quaternary ammonium salt (a deblocking catalyst) may be used to reduce the thermal energy required for the dissociation of the blocking agent (see Japanese Unexamined Patent Application Publication No. 2014-084426).

SUMMARY

Conventionally, the baking of coating materials has been performed at high temperatures of 150 °C or higher. However, in recent years, for the purpose of cost reduction, reduction of carbon dioxide emissions, suppression of deterioration of substrates due to heat, and the like during baking and coating, it has also been required to cure coating films at lower temperatures than before (for example, at a temperature of 140 °C or lower). Therefore, it is also important that the coating composition has good curability, that is, that it can form a coating film with good hardness and good gel fraction when a baking treatment is performed at a lower temperature than before. In this regard, the above-mentioned quaternary ammonium salt can improve the curability of a coating composition including a blocked polyisocyanate, making it possible to cure the coating film even at a temperature of 140 °C or lower. On the other hand, methods for obtaining a coating composition having excellent curability without adding a deblocking catalyst such as a quaternary ammonium salt are not well known.

Some aspects of the present disclosure aim to provide a novel coating composition having excellent curability and a modified blocked polyisocyanate used in the coating composition.

As a result of studies by the inventors of the present disclosure, it has been found that by using a blocked polyisocyanate modified with a hydroxyl group-containing quaternary ammonium salt (a modified blocked polyisocyanate), a coating composition having excellent curability can be obtained without adding a deblocking catalyst. The present disclosure is based on the findings of the inventors.

The present disclosure provides at least the following [1] to [10].

[1] A modified blocked polyisocyanate which is a blocked polyisocyanate modified with a hydroxyl group-containing quaternary ammonium salt (I) represented by the following formula (I):

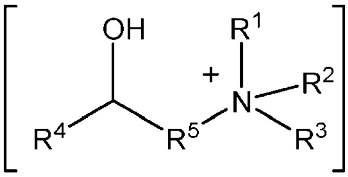

X⁻ (I)

wherein, in the formula (I), $R^1$ and $R^2$ each independently represent a monovalent hydrocarbon group having 1 to 8 carbon atoms; $R^3$ represents a monovalent hydrocarbon group having 1 to 16 carbon atoms, optionally having an ether group, a thioether group, or a tertiary amino group; any two or three of $R^1$ to $R^3$ may be bonded together to form a ring; $R^4$ represents a hydrogen atom or a monovalent hydrocarbon group having 1 to 8 carbon atoms; $R^5$ represents a divalent hydrocarbon group having 1 to 16 carbon atoms; and $X^-$ represents a monovalent anionic group.

[2] The modified blocked polyisocyanate according to [1], wherein the $R^1$, the $R^2$, and the $R^3$ each independently are a monovalent hydrocarbon group having 1 to 3 carbon atoms.

[3] The modified blocked polyisocyanate according to [1] or [2], wherein the anionic group is a fatty acid group having 1 to 12 carbon atoms, a monoalkyl carbonate group having an alkyl group having 1 to 8 carbon atoms, or a hydroxyl group.

[4] The modified blocked polyisocyanate according to any one of [1] to [3], including a structure derived from an aliphatic polyisocyanate having an aliphatic hydrocarbon group having 4 to 6 carbon atoms, or a derivative of the aliphatic polyisocyanate.

[5] The modified blocked polyisocyanate according to any one of [1] to [4], having at least one group selected from the group consisting of an isocyanate group blocked with an oxime-based blocking agent, an isocyanate group blocked with a pyrazole-based blocking agent, and an isocyanate group blocked with an imidazole-based blocking agent.

[6] The modified blocked polyisocyanate according to any one of [1] to [5], which is a reaction product of a blocked polyisocyanate having a free isocyanate group and the hydroxyl group-containing quaternary ammonium salt (I), or a derivative of the reaction product.

[7] A method for producing the modified blocked polyisocyanate according to any one of [1] to [6], the method including:

reacting a blocked polyisocyanate having a free isocyanate group with the hydroxyl group-containing quaternary ammonium salt (I).

[8] A coating composition including a base agent and a curing agent,

wherein the curing agent includes the modified blocked polyisocyanate according to any one of [1] to [6].

[9] A coating film formed from the coating composition according to [8].

[10] A method for forming a coating film, the method including:

applying the coating composition according to [8] to a substrate and curing by heating at 100 to 140 °C.

According to some aspects of the present disclosure, it is possible to provide a novel coating composition having excellent curability and a modified blocked polyisocyanate used in the coating composition.

## DETAILED DESCRIPTION

Hereinafter, exemplary embodiments of the present disclosure will be described. However, the present disclosure is not limited to the following embodiments in any way. In this specification, a numerical range indicated using "to" indicates a range including the numerical values described before and after "to" as the minimum value and the maximum value, respectively. Unless otherwise specified, the units of the numerical values described before and after "to" are the same. In addition, the upper limit values and lower limit values described individually can be combined arbitrarily.

<Modified Blocked Polyisocyanate>

A modified blocked polyisocyanate according to one embodiment of the present disclosure is a blocked polyisocyanate modified with a hydroxyl group-containing quaternary ammonium salt represented by the following formula (I) (hereinafter, also referred to as "hydroxyl group-containing quaternary ammonium salt (I)").

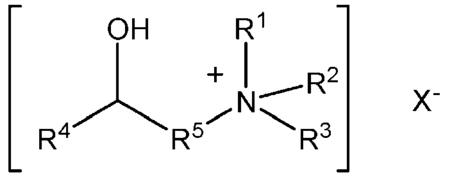

(I)

In the formula (I), $R^1$ and $R^2$ each independently represent a monovalent hydrocarbon group having 1 to 8 carbon atoms; $R^3$ represents a monovalent hydrocarbon group having 1 to 16 carbon atoms, optionally having an ether group, a thioether group, or a tertiary amino group; any two or three of $R^1$ to $R^3$ may be bonded together to form a ring; $R^4$ represents a hydrogen atom or a monovalent hydrocarbon group having 1 to 8 carbon atoms; $R^5$ represents a divalent hydrocarbon group having 1 to 16 carbon atoms; and $X^-$ represents a monovalent anionic group. $R^1$ to $R^4$ may be the same as or different from each other.

According to the above-mentioned modified blocked polyisocyanate, a novel coating composition having excellent curability can be obtained. That is, according to the above-mentioned modified blocked polyisocyanate, a coating composition can be obtained that can form a coating film with good hardness and good gel fraction even when a baking treatment is performed at a temperature of 140 °C or lower (for example, 100 to 140 °C). In addition, since the above-mentioned modified blocked polyisocyanate can itself function as a deblocking catalyst, it can dissociate the blocking agent by heating to generate isocyanate groups (free isocyanate groups) even in the absence of a deblocking catalyst. Therefore, according to the above-mentioned modified blocked polyisocyanate, it is also possible to obtain a coating composition that is less likely to cause coloration of the coating film due to a deblocking catalyst such as a quaternary ammonium salt.

The modified blocked polyisocyanate has, for example, an isocyanate group blocked with a blocking agent (hereinafter, also referred to as a "blocked isocyanate group") and an isocyanate group modified with the hydroxyl group-containing quaternary ammonium salt (I) (hereinafter, also referred to as a "modified isocyanate group"). The modified blocked polyisocyanate may have a structure derived from an unblocked polyisocyanate. That is, the modified blocked polyisocyanate may have a structure derived from an unblocked polyisocyanate, a blocked isocyanate group, and a modified isocyanate group.

(Unblocked Polyisocyanate)

The unblocked polyisocyanate is a polyisocyanate that does not have the above-mentioned blocked isocyanate group. The unblocked polyisocyanate has a plurality of isocyanate groups (free isocyanate groups). Examples of the unblocked polyisocyanate include aromatic polyisocyanates, aliphatic polyisocyanates, alicyclic polyisocyanates, and their polyisocyanate derivatives. Examples of the derivatives include isocyanurates, allophanates, biurets, and the like.

From the viewpoint of improving the yellowing resistance of the cured coating film, the unblocked polyisocyanate may be a polyisocyanate that does not have an aromatic ring, that is, a non-aromatic polyisocyanate. Examples of the non-aromatic polyisocyanate include aliphatic polyisocyanates such as hexamethylene diisocyanate, tetramethylene diisocyanate, 2-methyl-pentane-1,5-diisocyanate, 3-methyl-pentane-1,5-diisocyanate, lysine triisocyanate, and trioxyethylene diisocyanate; alicyclic polyisocyanates such as isophorone diisocyanate, cyclohexyl diisocyanate, hydrogenated diphenylmethane diisocyanate, norbornane diisocyanate, hydrogenated tolylene diisocyanate, hydrogenated xylene diisocyanate, and hydrogenated tetramethylxylene diisocyanate; and derivatives thereof. Examples of the derivatives include isocyanurates, allophanates, biurets, and the like. The derivative may be an isocyanate group-containing prepolymer obtained by the reaction of the above polyisocyanate and a polyol, and may also be a derivative of the prepolymer (for example, an isocyanurate, an allophanate, a biuret, or the like). As the polyol, for example, a diol having 2 to 9 carbon atoms is used. Examples of such a diol include ethylene glycol, 1,2-propanediol, 1,3-propanediol, 1,2-butanediol, 1,3-butanediol, 1,4-butanediol, and 1,5-pentanediol.

From the viewpoint of further improving curability, the unblocked polyisocyanate may include an aliphatic polyisocyanate having an aliphatic hydrocarbon group having 4 to 6 carbon atoms or a derivative thereof, and from the viewpoint of still further improving curability, it may include hexamethylene diisocyanate or a derivative thereof. In other words, the modified blocked polyisocyanate may have a structure derived from an aliphatic polyisocyanate having an aliphatic hydrocarbon group having 4 to 6 carbon atoms or a derivative thereof, and may have a structure derived from hexamethylene diisocyanate or a derivative thereof. The derivative of an aliphatic polyisocyanate having an aliphatic hydrocarbon group having 4 to 6 carbon atoms (for example, hexamethylene diisocyanate) may be at least one selected from the group consisting of an isocyanurate, an allophanate, and a biuret. These derivatives may be derivatives of the above-mentioned isocyanate group-containing prepolymer. Among these, when the derivative of hexamethylene diisocyanate is an isocyanurate, a higher coating film hardness tends to be obtained. When the unblocked polyisocyanate includes an isocyanurate, from the viewpoint of further improving the coating film hardness, the content of the isocyanurate

trimer (isocyanurate trimer content) based on the total mass of the unblocked polyisocyanate may be 50 mass% or more, and the content of isocyanurate groups (isocyanurate group content) relative to the total (100 mol%) of isocyanurate groups and allophanate groups in the unblocked polyisocyanate may be more than 80 mol%. The upper limit of the isocyanurate trimer content may be 80 mass%, and the upper limit of the isocyanurate group content may be 99 mol%.

(Blocked Isocyanate Group)

The blocked isocyanate group is an isocyanate group blocked with a blocking agent. The blocked isocyanate group may have a structure derived from a blocking agent. The blocked isocyanate group can also be rephrased as a group formed by the reaction between a blocking agent and an isocyanate group.

Examples of the blocking agent include alcohol-based blocking agents such as methanol, ethanol, n-butanol, isobutanol, 2-ethylhexanol, butyl cellosolve, propylene glycol monomethyl ether, ethylene glycol, and benzyl alcohol; phenol-based blocking agents such as phenol, cresol, ethylphenol, butylphenol, and 2-hydroxypyridine; lactam-based blocking agents such as ε-caprolactam, δ-valerolactam, and γ-butyrolactam; oxime-based blocking agents such as formaldoxime, acetaldoxime, acetone oxime, methyl ethyl ketoxime, methyl isobutyl ketoxime, and cyclohexanone oxime; imidazole-based blocking agents such as imidazole, 2-methylimidazole, 4-methylimidazole, 2,4-dimethylimidazole, 2-ethylimidazole, 2-propylimidazole, 2-isopropylimidazole, 4-methyl-2-propylimidazole, 2-phenylimidazole, 4-phenylimidazole, 5-phenylimidazole, 2-methyl-4-phenylimidazole, 2-ethyl-4-methylimidazole, 2-undecylimidazole, and 2-heptadecylimidazole; pyrazole-based blocking agents such as 3,5-dimethylpyrazole, 3-methylpyrazole, and pyrazole; amine-based blocking agents such as diphenylamine, diisopropylamine, and isopropylethylamine; and triazole-based blocking agents such as triazole, 1,2,4-triazole, and 3,5-dimethyl-1,2,4-triazole. From the viewpoints of storage stability and suppressing coloration of the coating film, an oxime-based blocking agent may be used. As the oxime-based blocking agent, methyl ethyl ketoxime is preferable. From the viewpoints of improving curability and yellowing resistance of the cured coating film, as well as suppressing coloration of the coating film, a pyrazole-based blocking agent may be used. As the pyrazole-based blocking agent, 3,5-dimethylpyrazole is preferable. From the viewpoint of improving curability, an imidazole-based blocking agent may also be used. As the imidazole-based blocking agent, 2-ethyl-4-methylimidazole and 2-phenylimidazole are preferable.

From the above viewpoints, in one embodiment, the modified blocked polyisocyanate may have at least one group selected from the group consisting of an isocyanate group blocked with an oxime-based blocking agent, an isocyanate group blocked with a pyrazole-based blocking agent, and an isocyanate group blocked with an imidazole-based blocking agent.

(Modified Isocyanate Group)

The modified isocyanate group is an isocyanate group modified with the hydroxyl group-containing quaternary ammonium salt (I). The modified isocyanate group can also be rephrased as a group formed by the reaction between the hydroxyl group-containing quaternary ammonium salt (I) and an isocyanate group (for example, the reaction between the hydroxyl group in the hydroxyl group-containing quaternary ammonium salt (I) and an isocyanate group). The modified isocyanate group has, for example, a structure represented by the following formula (Ia).

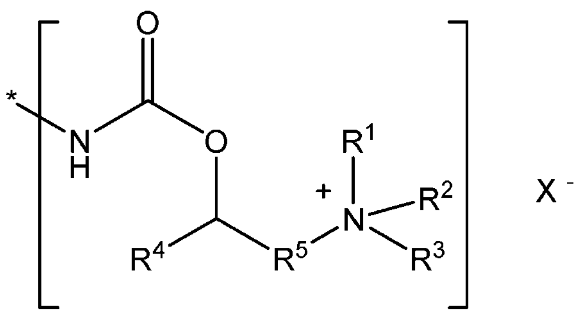

(Ia)

$R^1$ to $R^5$ and $X^-$ in the formula (Ia) have the same meanings as $R^1$ to $R^5$ and $X^-$ in the formula (I), and * represents a bond. The details of $R^1$ to $R^5$ and $X^-$ in the following description apply to both formula (I) and formula (Ia).

The monovalent hydrocarbon group represented by $R^1$ to $R^4$ may be an aliphatic hydrocarbon group (for example, an alkyl group or a cycloalkyl group), or may be an aromatic hydrocarbon group (for example, an aryl group). From the viewpoint of further improving curability, the monovalent hydrocarbon group represented by $R^1$ to $R^4$ may be an aliphatic hydrocarbon group, and from the viewpoint of further improving curability, it may be a linear aliphatic hydrocarbon group. From the same viewpoint, the aliphatic hydrocarbon group is preferably an alkyl group, and more preferably a linear

alkyl group. Examples of the alkyl group include a methyl group, an ethyl group, an n-propyl group, an isopropyl group, an n-butyl group, an isobutyl group, a t-butyl group, an n-pentyl group, an n-hexyl group, an n-heptyl group, an n-octyl group, and a 2-ethylhexyl group.

From the viewpoint of further improving curability, the number of carbon atoms of the monovalent hydrocarbon group represented by $R^1$ and $R^2$ may be 1 to 3. That is, $R^1$ and $R^2$ may be monovalent hydrocarbon groups having 1 to 3 carbon atoms. As the monovalent hydrocarbon group having 1 to 3 carbon atoms, an alkyl group having 1 to 3 carbon atoms (a methyl group, an ethyl group, an n-propyl group, and an isopropyl group) is preferable, a linear alkyl group having 1 to 3 carbon atoms (a methyl group, an ethyl group, and an n-propyl group) is more preferable, and a methyl group is even more preferable.

From the viewpoint of further improving curability, the number of carbon atoms of the monovalent hydrocarbon group represented by $R^3$ may be 1 to 12, and from the viewpoint of further improving curability while further suppressing coloration of the coating film, it may be 1 to 3. That is, $R^3$ may be a monovalent hydrocarbon group having 1 to 12 carbon atoms, and may also be a monovalent hydrocarbon group having 1 to 3 carbon atoms.

The monovalent hydrocarbon group represented by $R^3$ may have at least one group among an ether group, a thioether group, and a tertiary amino group. Examples of the hydrocarbon group having these groups include an N,N-diisopropylmethylamino group, an N-ethyldiisopropylamino group, a triisopropylamino group, a triisobutylamino group, an N,N,N',N",N"-pentamethyldiethylenetriamino group, a 3-dimethylamino-1-propyl group, a 6-dimethylamino-1-hexyl group, a 2-(2-dimethylamino)ethoxyethyl group, a 2-dimethylaminoethyl ether group, a dimethyl sulfide group, a diethyl sulfide group, a dipropyl sulfide group, and a dibutyl sulfide group, and the like.

From the viewpoint of further suppressing coloration of the coating film, the total number of ether groups, thioether groups, and tertiary amino groups that the monovalent hydrocarbon group represented by $R^3$ has may be 2 or less, and from the viewpoint of even further suppressing coloration of the coating film, it may be 1 or 0. Among these, coloration of the coating film tends to be more suppressed when the number of ether groups and thioether groups is both 0 (that is, when no ether group and no thioether group are present), and coloration of the coating film tends to be even more suppressed when the number of ether groups, thioether groups, and tertiary amino groups is all 0 (that is, when no ether group, no thioether group, and no tertiary amino group are present). A specific example of such a monovalent hydrocarbon group is an alkyl group having 1 to 3 carbon atoms (a methyl group, an ethyl group, an n-propyl group, and an isopropyl group). As the alkyl group having 1 to 3 carbon atoms, a linear alkyl group having 1 to 3 carbon atoms (a methyl group, an ethyl group, and an n-propyl group) is preferable, and a methyl group is more preferable.

In one embodiment, from the viewpoint of further improving curability, $R^1$ and $R^2$ may each independently be a monovalent hydrocarbon group having 1 to 3 carbon atoms, and $R^3$ may be a monovalent hydrocarbon group having 1 to 8 carbon atoms, optionally having an ether group, a thioether group, or a tertiary amino group. From the viewpoint of further improving curability while further suppressing coloration of the coating film, $R^1$, $R^2$, and $R^3$ may each independently be a monovalent hydrocarbon group having 1 to 3 carbon atoms. Among these, when $R^1$, $R^2$, and $R^3$ are all methyl groups, the above effects are more readily obtained.

From the viewpoint of further improving curability, $R^4$ may be a hydrogen atom or a monovalent hydrocarbon group having 1 to 3 carbon atoms. Among the hydrocarbon groups, an alkyl group having 1 to 3 carbon atoms (a methyl group, an ethyl group, an n-propyl group, and an isopropyl group) is preferable, a linear alkyl group having 1 to 3 carbon atoms (a methyl group, an ethyl group, and an n-propyl group) is more preferable, and a methyl group is even more preferable.

The divalent hydrocarbon group represented by $R^5$ may be an aliphatic hydrocarbon group (for example, an alkylene group or a cycloalkylene group), or may be an aromatic hydrocarbon group (for example, an arylene group). When the hydrocarbon group is an aliphatic hydrocarbon group, its number of carbon atoms is, for example, 1 to 16. The number of carbon atoms of the aliphatic hydrocarbon group may also be 1 to 12 or 2 to 6. When the hydrocarbon group is an aromatic hydrocarbon group, its number of carbon atoms is, for example, 6 to 16. The number of carbon atoms of the aromatic hydrocarbon group may also be 6 to 14 or 6 to 12.

From the viewpoint of further improving curability, the divalent hydrocarbon group represented by $R^5$ may be an aliphatic hydrocarbon group. The aliphatic hydrocarbon group is preferably an alkylene group. Specific examples of the alkylene group include a methylene group, an ethylene group, an n-propylene group, an isopropylene group, an n-butylene group, an isobutylene group, a t-butylene group, an n-pentylene group, an n-hexylene group, an n-heptylene group, an n-octylene group, and a 2-ethylhexylene group.

From the viewpoint of further improving curability, the divalent hydrocarbon group represented by $R^5$ may be a hydrocarbon group having 1 to 3 carbon atoms. Among the hydrocarbon groups having 1 to 3 carbon atoms, an alkylene group having 1 to 3 carbon atoms (a methylene group, an ethylene group, an n-propylene group, and an isopropylene group) is preferable, a linear alkylene group having 1 to 3 carbon atoms (a methylene group, an ethylene group, and an n-propylene group) is preferable, and a methylene group is more preferable.

The monovalent anionic group represented by $X^-$ may be a group consisting of an anion derived from an acid such as an organic acid or an inorganic acid, or may be a group consisting of an anion derived from an ester such as a carbonate

ester. The anionic group of the quaternary ammonium salt may be a group that is not classified into any of these (for example, a hydroxyl group (hydroxide ion)). Examples of the group consisting of an anion derived from an organic acid (organic acid group) include a fatty acid group. Examples of the group consisting of an anion derived from an inorganic acid (inorganic acid group) include a halogen group (a fluoro group, a chloro group, a bromo group, etc.), a hydrogen carbonate group, and a carbonate group. Examples of the group consisting of an anion derived from an ester include a monoalkyl carbonate group.

The number of carbon atoms of the fatty acid group (aliphatic monocarboxylic acid group) may be, for example, 1 to 12, and may also be 1 to 7 or 1 to 3. Specific examples of the fatty acid group include a formate group, an acetate group, a 2-ethylhexanoic acid group (octylic acid group), a lauric acid group, a cyclohexanecarboxylic acid group, and a pivalic acid group.

The number of carbon atoms of the alkyl group in the monoalkyl carbonate group may be, for example, 1 to 8, and may also be 1 to 4 or 1 to 2. Specific examples of the monoalkyl carbonate group include a methyl carbonate group, an ethyl carbonate group, a propyl carbonate group, and a butyl carbonate group.

From the viewpoint of further improving curability, $X^-$ may be a fatty acid group having 1 to 12 carbon atoms, a monoalkyl carbonate group having an alkyl group having 1 to 8 carbon atoms, or a hydroxyl group. Among these, a fatty acid group having 1 to 7 carbon atoms and a hydroxyl group are preferable, and a 2-ethylhexanoic acid group, a formate group, an acetate group, and a hydroxyl group are more preferable.

Examples of the hydroxyl group-containing quaternary ammonium salt (I) include salts having a cationic group (quaternary ammonium group) selected from the group consisting of a trimethyl(2-hydroxyethyl)ammonium group, a trimethyl(2-hydroxypropyl)ammonium group, a trimethyl(2-hydroxybutyl)ammonium group, a triethyl(2-hydroxyethyl)ammonium group, a tripropyl(2-hydroxyethyl)ammonium group, and a tributyl(2-hydroxyethyl)ammonium group. According to these hydroxyl group-containing quaternary ammonium salts (I), even more excellent curability is likely to be obtained. Among these, according to a salt having a trimethyl(2-hydroxyethyl)ammonium group, still more excellent curability is likely to be obtained.

The salt having the above cationic group may be a salt having an anionic group selected from the group consisting of a fatty acid group having 1 to 12 carbon atoms, a monoalkyl carbonate group having an alkyl group having 1 to 8 carbon atoms, and a hydroxyl group.

Specific examples of the hydroxyl group-containing quaternary ammonium salt (I) include trimethyl(2-hydroxyethyl)ammonium hydroxide, trimethyl(2-hydroxyethyl)ammonium acetate, trimethyl(2-hydroxyethyl)ammonium 2-ethylhexanoate, trimethyl(2-hydroxypropyl)ammonium 2-ethylhexanoate, trimethyl(2-hydroxypropyl)ammonium formate, trimethyl(2-hydroxypropyl)ammonium acetate, trimethyl(2-hydroxypropyl)ammonium hydroxide, and trimethyl(2-hydroxypropyl)ammonium carbonate. Among these, according to at least one hydroxyl group-containing quaternary ammonium salt (I) selected from the group consisting of trimethyl(2-hydroxyethyl)ammonium hydroxide, trimethyl(2-hydroxyethyl)ammonium acetate, and trimethyl(2-hydroxypropyl)ammonium 2-ethylhexanoate, even more excellent curability is likely to be obtained, and according to at least one hydroxyl group-containing quaternary ammonium salt (I) selected from the group consisting of trimethyl(2-hydroxyethyl)ammonium hydroxide and trimethyl(2-hydroxyethyl)ammonium acetate, still more excellent curability is likely to be obtained.

The content of the modified isocyanate group may be 0.1 to 30 mass%, and may also be 0.5 to 20 mass% or 1 to 10 mass%, based on the total mass of a compound obtained by dissociating the blocking agent from the modified blocked polyisocyanate.

The modified blocked polyisocyanate may have a free isocyanate group, but when the blocked polyisocyanate does not have a free isocyanate group, storage stability can be further improved. From the viewpoint of further enhancing storage stability, all of the effective isocyanate groups in the modified blocked polyisocyanate may be blocked isocyanate groups. Here, the term "effective isocyanate group" means both a free isocyanate group and a blocked isocyanate group.

The effective isocyanate group content (hereinafter, referred to as "effective NCO content") of the modified blocked polyisocyanate may be 4 to 28 mass%, and may also be 5 to 25 mass% or 6 to 22 mass%, from the viewpoint of further enhancing the curability of the coating. Here, the effective NCO content is the content of the isocyanate groups present in the modified blocked polyisocyanate that can participate in the cross-linking reaction, expressed in mass%. The effective NCO content can be rephrased as the content (free NCO content) of free isocyanate groups in a compound obtained by dissociating the blocking agent from the modified blocked polyisocyanate, relative to the total mass of the modified blocked polyisocyanate. The free NCO content can be determined by reacting the isocyanate groups in a measurement sample (a compound obtained by dissociating the blocking agent from the modified blocked polyisocyanate) with an excess of a secondary amine, and then back-titrating the unreacted secondary amine with hydrochloric acid.

The weight-average molecular weight of the modified blocked polyisocyanate may be, for example, 600 to 4000. When the weight-average molecular weight of the modified blocked polyisocyanate is within such a range, curability tends to be further improved. From the same viewpoint, the weight-average molecular weight of the modified blocked polyisocyanate may be 700 or more or 800 or more, and may be 3500 or less or 3000 or less. The weight-average molecular weight in this specification is a value (unit: g/mol) in terms of standard polystyrene, measured by gel permeation

chromatography (GPC).

The modified blocked polyisocyanate can be obtained, for example, by reacting a polyisocyanate having a free isocyanate group, such as an unblocked polyisocyanate, with a blocking agent and the hydroxyl group-containing quaternary ammonium salt (I). That is, the modified blocked polyisocyanate can be a reaction product of a polyisocyanate having a free isocyanate group, a blocking agent, and the hydroxyl group-containing quaternary ammonium salt (I). The polyisocyanate having a free isocyanate group, the blocking agent, and the hydroxyl group-containing quaternary ammonium salt (I) may each be used as one type alone, or two or more types may be used in combination. However, from the viewpoint of improving the yellowing resistance of the cured coating film, an aromatic polyisocyanate may not be used as the polyisocyanate having a free isocyanate group.

From the viewpoint of suppressing the reaction of a plurality of polyisocyanates(isocyanate groups) with each other and the progression of unintended multimerization and increase in molecular weight, due to the hydroxyl group-containing quaternary ammonium salt (I) functioning as a catalyst for reacting isocyanate groups, the method for producing the modified blocked polyisocyanate may include a step (i) of reacting a polyisocyanate having a free isocyanate group with a blocking agent to obtain a blocked polyisocyanate having a free isocyanate group, and a step (ii) of reacting the blocked polyisocyanate with the hydroxyl group-containing quaternary ammonium salt (I). That is, the modified blocked polyisocyanate may be a reaction product of a blocked polyisocyanate having a free isocyanate group and the hydroxyl group-containing quaternary ammonium salt (I). Step (i) is not essential, and in step (ii), a pre-synthesized blocked polyisocyanate having a free isocyanate group may be used.

The reaction between the polyisocyanate having a free isocyanate group and the blocking agent can be performed according to the reaction conditions of a typical blocking reaction. The reaction between the polyisocyanate and the blocking agent may be performed at room temperature, or may be performed with heating. Regardless of the presence or absence of heating, the temperature of the reaction solution may be, for example, 20 to 200 °C.

The reaction between the blocked polyisocyanate and the hydroxyl group-containing quaternary ammonium salt (I) may be performed, for example, in the presence of a solvent. As the solvent, aromatic solvents such as toluene and xylene, ketone solvents such as acetone, methyl ethyl ketone, and methyl isobutyl ketone, ester solvents such as ethyl acetate and butyl acetate, glycol ether solvents such as ethylene glycol monoethyl ether acetate, propylene glycol monomethyl ether acetate, and diethylene glycol diethyl ether, and the like can be used. The reaction temperature may be 20 to 200 °C. The reaction time may be, for example, 1 to 10 hours. The above reaction proceeds even without a catalyst, but a known urethanization reaction catalyst can also be used to promote the reaction.

The amounts of the polyisocyanate, the blocking agent, and the hydroxyl group-containing quaternary ammonium salt (I) used may be adjusted so that the content of the modified isocyanate group is within the above range. For example, in the above method, the blocking agent may be used in an amount of 40 to 99 mol% with respect to the total number of moles of free isocyanate groups in the polyisocyanate before blocking. From the viewpoint of promoting the modification of free isocyanate groups by the hydroxyl group-containing quaternary ammonium salt (I), the amount of the hydroxyl group-containing quaternary ammonium salt (I) used may be 0.1 to 60 mol%, and may also be 0.3 to 60 mol%, with respect to the total number of moles of free isocyanate groups in the obtained blocked polyisocyanate. From the same viewpoint, the amount of the hydroxyl group-containing quaternary ammonium salt (I) used may be 0.2 to 20 mass%, 0.2 to 5 mass%, or 0.2 to 2.5 mass%, based on the total mass of the obtained blocked polyisocyanate.

The modified blocked polyisocyanate may be a compound derived from a reaction product of a polyisocyanate having a free isocyanate group, a blocking agent, and the hydroxyl group-containing quaternary ammonium salt (I) (for example, a reaction product of a blocked polyisocyanate having a free isocyanate group and the hydroxyl group-containing quaternary ammonium salt (I)). The modified blocked polyisocyanate may be, for example, a compound obtained by reacting a reaction product of a polyisocyanate having a free isocyanate group, a blocking agent, and the hydroxyl group-containing quaternary ammonium salt (I) with a compound that can react with the free isocyanate groups in the reaction product (for example, an active hydrogen group-containing compound, etc.).

The modified blocked polyisocyanate described above and a composition including the modified blocked polyisocyanate can be used as a curing agent for a coating composition. That is, another embodiment of the present disclosure is a curing agent for a coating material, including the above-mentioned modified blocked polyisocyanate. The curing agent for a coating material may include a deblocking catalyst, but from the viewpoint of suppressing coloration of the coating film, it may not include a quaternary ammonium salt, and from the viewpoint of enhancing the glossiness of the coating film, it may not include an organometallic catalyst (particularly an organotin compound such as dioctyltin diacetate).

<Coating Composition>

A coating composition according to another embodiment of the present disclosure includes a base agent and a curing agent, and the curing agent includes the modified blocked polyisocyanate of the above embodiment.

Since the above coating composition includes the modified blocked polyisocyanate of the above embodiment, it

has excellent curability. Therefore, according to the above coating composition, a coating film with good hardness and good gel fraction can be formed even when a baking treatment is performed at a lower temperature than before (for example, at a temperature of 140 °C or lower). In addition, according to the above coating composition, a coating film with suppressed coloration can be easily formed by, for example, adjusting the blending amount of the quaternary ammonium salt.

(Base Agent)

The base agent includes, for example, an active hydrogen group-containing compound. Examples of the active hydrogen group include a hydroxy group, an amino group, and the like. The average number of functional groups (average number of active hydrogen groups) of the active hydrogen group-containing compound is 2 or more, and may be 2 to 50. Examples of the active hydrogen-containing compound having such an average number of functional groups include a polyol, a polyamine, an amino alcohol, and the like. Among these, when the base agent includes a polyol as the active hydrogen group-containing compound, more excellent curability is likely to be obtained, and a coating film with less coloration is also likely to be obtained.

The number-average molecular weight of the active hydrogen group-containing compound is, for example, 500 to 20,000, and may be 500 to 10,000. Examples of the active hydrogen group-containing compound having such a number-average molecular weight include a polyurethane resin, a polyamide resin, a saturated or unsaturated polyester resin, an alkyd resin modified with a saturated fatty acid or an unsaturated fatty acid, an acrylic resin, a fluororesin, an epoxy resin, a cellulose resin, and the like (provided that all are resins having an active hydrogen group). Furthermore, considering coating film performance such as gloss, feeling of fullness, hardness, durability, flexibility, and drying property, as well as cost, the active hydrogen group-containing compound may be a saturated or unsaturated polyester resin, an alkyd resin modified with a saturated fatty acid or an unsaturated fatty acid, or an acrylic resin.

The active hydrogen group-containing compound may be used as one type alone, or two or more types may be used in combination.

(Curing Agent)

The curing agent includes the modified blocked polyisocyanate of the above embodiment. The modified blocked polyisocyanate may be used as one type alone, or two or more types may be used in combination. For example, two or more types of modified blocked polyisocyanates derived from different types of unblocked polyisocyanates may be used in combination. The curing agent may further include an isocyanate compound (a compound having an isocyanate group) other than the modified blocked polyisocyanate of the above embodiment. The content of the isocyanate compound may be 0 to 40 mass%, and may also be 0 to 20 mass% or 0 to 10 mass%, based on the total mass of the isocyanate compounds in the curing agent.

The blending ratio of the base agent and the curing agent in the coating composition may be adjusted based on the ratio of the total amount of effective isocyanate groups in the curing agent to the total amount of active hydrogen groups in the base agent. The ratio of the total amount of effective isocyanate groups in the curing agent to the total amount of active hydrogen groups in the base agent may be from 1/9 to 9/1, and may also be from 2/8 to 8/2, in terms of molar ratio. When the molar ratio is within the above range, better curability is obtained.

The coating composition may further include, as other components, additives such as pigments, dispersion stabilizers, viscosity modifiers, leveling agents, anti-gelling agents, light stabilizers, antioxidants, ultraviolet absorbers, heat resistance improvers, inorganic and organic fillers, plasticizers, lubricants, antistatic agents, reinforcing materials, and catalysts. These components may be contained in the base agent or in the curing agent.

The coating composition may contain a solvent as another component. Examples of the solvent include benzene, toluene, xylene, cyclohexane, acetone, methyl ethyl ketone, methyl isobutyl ketone, ethyl acetate, n-butyl acetate, cellosolve acetate, propylene glycol monomethyl ether acetate, diethylene glycol dimethyl ether, 1,4-dioxane, and the like. These solvents may be used alone, or two or more types may be used in combination. The content of the solvent may be 0 to 95 mass%, and may also be 5 to 90 mass% or 10 to 80 mass%, based on the total mass of the coating composition.

The coating composition may include an unblocked polyisocyanate (for example, a polyisocyanate remaining as an unreacted substance), may include a blocking agent (for example, a blocking agent remaining as an unreacted substance), and may include the hydroxyl group-containing quaternary ammonium salt (I) (for example, the hydroxyl group-containing quaternary ammonium salt (I) remaining as an unreacted substance). The content of the unblocked polyisocyanate included in the coating composition may be 5 mass% or less, and may also be 1 mass% or less, 0.1 mass% or less, or 0 mass%, based on the total solid content of the coating composition. The content of the blocking agent included in the coating composition may be 5 mass% or less, and may also be 1 mass% or less, 0.1 mass% or less, or 0 mass%, based on the total solid content of the coating composition. The content of the hydroxyl group-containing quaternary ammonium salt (I) included in the coating composition may be 5 mass% or less, and may also be 1 mass% or less, 0.1

mass% or less, or 0 mass%, based on the total solid content of the coating composition. The content of the quaternary ammonium salt included in the coating composition may be 5 mass% or less, and may also be 1 mass% or less, 0.1 mass% or less, or 0 mass%, based on the total solid content of the coating composition.

The coating composition may be a one-pack composition in which all constituent components are included in a single liquid, or may be a multi-pack composition in which the constituent components are present separately in a plurality of liquids. The multi-pack coating composition may be provided with a first liquid including the base agent and a second liquid including the curing agent.

The coating composition can be used as a topcoat/intermediate coating material for automobiles, an anti-chipping coating material, an electrodeposition coating material, a coating material for automobile parts, a coating material for automobile repair, a coating for pre-coated metals/rust-proof steel sheets for metal products such as home appliances and office equipment, a coating material for building materials, a coating material for plastics, an adhesive, an adhesion promoter, a sealing agent, and the like.

<Coating Film and Method for Forming a Coating Film>

Another embodiment of the present disclosure is a coating film formed from the coating composition of the above embodiment.

The coating film may be an uncured coating film made of the coating composition of the above embodiment, or may be a coating film (cured coating film) formed by curing the uncured coating film. The thickness of the coating film is, for example, 5 to 40 μm. The coating film may be a thin film with a thickness of less than 20 μm.

Another embodiment of the present disclosure is a method for forming a coating film, including applying the coating composition of the above embodiment to a substrate (object to be coated) and curing the coating composition (an uncured coating film made of the coating composition). The application of the coating composition may be performed by a known method such as roll coating, curtain flow coating, spray coating, electrostatic coating, bell coating, or electrodeposition coating. The application amount of the coating composition, the thickness of the coating film, and the like may be made appropriate according to the material of the surface to be coated, and the like.

The curing of the coating composition (the uncured coating film) may be performed by heating it. The heating temperature (baking temperature) may be, for example, 200 °C or lower, and the heating time (baking time) may be, for example, 10 to 180 minutes. Conventionally, the baking of a coating composition has been performed at a high temperature of 150 °C or higher, but according to the coating composition of the present embodiment, a good cured coating film can be obtained even when baking is performed at a low temperature of 140 °C or lower (for example, 100 to 140 °C).

Examples of the substrate include molded bodies formed from materials such as stainless steel, phosphated steel, galvanized steel, iron, copper, aluminum, brass, glass, acrylic polyol, polycarbonate resin, polyethylene terephthalate resin, polyethylene naphthalate resin, polybutylene phthalate resin, polystyrene resin, AS resin, ABS resin, polycarbonate-ABS resin, 6-nylon resin, 6,6-nylon resin, MXD6 nylon resin, polyvinyl chloride resin, polyvinyl alcohol resin, polyurethane resin, phenol resin, melamine resin, polyacetal resin, chlorinated polyolefin resin, polyolefin resin, polyamide resin, polyetheretherketone resin, polyphenylene sulfide resin, NBR resin, chloroprene resin, SBR resin, and SEBS resin, and surface-treated products of the molded bodies. The surface-treated product may be a molded body of an olefin resin such as polyethylene or polypropylene that has been subjected to a surface treatment such as a corona discharge treatment (a surface-treated molded body).

## Examples

Hereinafter, the content of the present disclosure will be described in more detail using Examples, Comparative Examples, and Reference Examples, but the present disclosure is not limited to the following Examples.

<Synthesis Example 1>

(Preparation of Polyisocyanate A-1)

In a four-necked flask equipped with a stirrer, a thermometer, a heating device, a nitrogen seal tube, and a cooling tube, 995 g of hexamethylene diisocyanate (hereinafter, referred to as HDI), 5.0 g of 1,3-butanediol (manufactured by Tokyo Chemical Industry Co., Ltd.), and 0.3 g of phenol (manufactured by Tokyo Chemical Industry Co., Ltd.) were charged, and a urethanization reaction was performed at 80 °C for 2 hours under a nitrogen stream. Thereafter, 0.04 g of potassium 2-ethylhexanoate (manufactured by Tokyo Chemical Industry Co., Ltd.), which is an isocyanuration catalyst, was added, and an isocyanuration reaction was performed at 70 °C for 2 hours. After the NCO content reached 40.0 mass%, 0.15 g of JP-508 (manufactured by Johoku Chemical Co., Ltd.) was added to perform a termination reaction, and

the reaction solution was cooled to room temperature. This reaction solution was subjected to thin-film distillation at a temperature of 130 °C and a pressure of 0.04 kPa to remove unreacted HDI, thereby obtaining purified polyisocyanate A-1. The NCO content of polyisocyanate A-1 was 21.8 mass%, and the viscosity at 25 °C was about 2,500 mPa·s.

($^1$H-NMR: Measurement of Isocyanurate Group Content)

$^1$H-NMR measurement of polyisocyanate A-1 was performed to determine the isocyanurate group content (the content of isocyanurate groups relative to the total (100 mol%) of isocyanurate groups and allophanate groups). Specifically, the isocyanurate group content was calculated from the area of the signal of the hydrogen atoms of the methylene group adjacent to the nitrogen atom of the isocyanurate group around 3.7 ppm and the signal of the hydrogen atom bonded to the nitrogen atom of the allophanate group around 8.5 ppm. The isocyanurate group content was 89 mol%. The $^1$H-NMR measurement was performed under the following measurement conditions.

[Measurement Conditions]

(1) Measurement apparatus: ECX400M (manufactured by JEOL Ltd., $^1$H-NMR)
(2) Measurement temperature: 23 °C
(3) Sample concentration: 0.1 g/1 ml
(4) Number of scans: 16
(5) Relaxation time: 5 seconds
(6) Solvent: Deuterated dimethyl sulfoxide
(7) Chemical shift reference: Hydrogen atom signal of the methyl group in deuterated dimethyl sulfoxide (2.5 ppm)

<Example 1>

(Preparation of Modified Blocked Polyisocyanate Composition)

In a four-necked flask equipped with a stirrer, a thermometer, a heating device, a nitrogen seal tube, and a cooling tube, 504 g of polyisocyanate A-1 and 241 g of butyl acetate (manufactured by Kishida Chemical Co., Ltd.) were charged, and after purging the flask with nitrogen and stirring for 30 minutes, 220 g of methyl ethyl ketoxime (manufactured by Ube Industries, Ltd., "MEKO" in the table) was charged in three portions so that the temperature did not exceed 80 °C. Thereafter, the mixture was reacted at 70 °C for 2 hours, 35 g of DABCO TMR (manufactured by Evonik, an ethylene glycol solution of trimethyl(2-hydroxypropyl)ammonium 2-ethylhexanoate, solid content concentration: 75 mass%, "DABCO" is a registered trademark (the same applies hereinafter)) was charged, and the mixture was reacted at 60 °C for 1 hour. When the peak of the NCO group (around 2270 $cm^{-1}$) disappeared in the infrared absorption spectrum (IR measurement), the mixture was cooled to room temperature to obtain a composition including a modified blocked polyisocyanate (hereinafter, referred to as "modified blocked polyisocyanate composition (1)"). The solid content concentration of the composition (the content of the modified blocked polyisocyanate) was 75 mass%, and the weight-average molecular weight of the modified blocked polyisocyanate was 1611. The weight-average molecular weight in this Example is a weight-average molecular weight relative to a value in terms of standard polystyrene, and was determined by GPC measurement under the following conditions.

[Measurement Conditions]

(1) Measurement apparatus: HLC-8420 (manufactured by Tosoh Corporation)
(2) Column: TSKgel (manufactured by Tosoh Corporation)
G3000H-XL, G2000H-XL, and G1000H-XL, one of each connected in series
(3) Carrier: Tetrahydrofuran
(4) Detection method: Differential refractive index detector

(Preparation of Coating Composition)

The coating composition of Example 1 was prepared by mixing 52 g of Acrydic A-801 (trade name, manufactured by DIC Corporation, acrylic polyol, solid content concentration: 50 mass%, hydroxyl value: 50 mgKOH/g), 18 g of the

modified blocked polyisocyanate composition (1), and 30 g of butyl acetate.

(Evaluation of Curability)

[Martens Hardness Measurement]

The coating composition prepared above was applied to a colored steel sheet (white) so that the thickness before drying was 100 μm. The obtained coating film was left to stand at room temperature for 60 minutes, and then baked by heating in a constant temperature oven at 120 °C for 20 minutes. The indentation hardness of the coating film after baking (cured coating film) was measured under the following conditions according to ISO 14577. The results are shown in Table 1.

[Conditions]

- Test apparatus: FISCHERSCOPE HM2000 (manufactured by Fischer Instruments K.K.)
- Indenter: Vickers diamond
- Test load: 5 mN
- Test temperature: 25 °C

[Gel Fraction Measurement]

The coating composition prepared above was applied to a release paper so that the thickness before drying was 200 μm. The obtained coating film was left to stand at room temperature for 60 minutes, and then baked by heating in a constant temperature oven at 120 °C for 20 minutes. The coating film after baking (cured coating film) was immersed in methyl ethyl ketone for 24 hours at room temperature, and the gel fraction was determined. The gel fraction was calculated from the following formula. The results are shown in Table 1.

Gel fraction (unit: mass%) = mass of coating film after immersion (mass of undissolved part) / mass of coating film before immersion × 100

(Evaluation of Degree of Coloration of Coating Film)

The coating composition prepared above was applied to a colored steel sheet (white) so that the thickness before drying was 100 μm. The obtained coating film was left to stand at room temperature for 60 minutes, and then baked by heating in a constant temperature oven at 160 °C for 60 minutes. The b* value based on the CIE Lab standard of the coating film after baking (cured coating film) was measured with a colorimeter (product name: SPECTRO2GUIDE) manufactured by BYK-GARDNER, and the degree of coloration of the coating film was evaluated. The results are shown in Table 1.

<Example 2>

(Preparation of Modified Blocked Polyisocyanate Composition)

In a four-necked flask equipped with a stirrer, a thermometer, a heating device, a nitrogen seal tube, and a cooling tube, 493 g of polyisocyanate A-1 and 236 g of butyl acetate were charged, and after purging the flask with nitrogen and stirring for 30 minutes, 236 g of 3,5-dimethylpyrazole (manufactured by Tokyo Chemical Industry Co., Ltd., "DMP" in the table) was charged in three portions so that the temperature did not exceed 80 °C. Thereafter, the mixture was reacted at 70 °C for 2 hours, 34 g of DABCO TMR was charged, and the mixture was reacted at 60 °C for 1 hour. When the peak of the NCO group (around 2270 $cm^{-1}$) disappeared in the infrared absorption spectrum (IR measurement), the mixture was cooled to room temperature to obtain a composition including a modified blocked polyisocyanate (hereinafter, referred to as "modified blocked polyisocyanate composition (2)"). The solid content concentration of the composition (the content of the modified blocked polyisocyanate) was 75 mass%, and the weight-average molecular weight of the modified blocked polyisocyanate was 1641 g/mol.

(Preparation of Coating Composition)

The coating composition of Example 2 was prepared by mixing 52 g of Acrydic A-801, 19 g of the modified blocked

polyisocyanate composition (2), and 29 g of butyl acetate.

(Evaluation)

The curability of the coating composition prepared above and the degree of coloration of the coating film made from the coating composition were evaluated in the same manner as in Example 1. The results are shown in Table 1.

<Example 3>

(Preparation of Modified Blocked Polyisocyanate Composition)

In a four-necked flask equipped with a stirrer, a thermometer, a heating device, a nitrogen seal tube, and a cooling tube, 477 g of polyisocyanate A-1 and 228 g of butyl acetate were charged, and after purging the flask with nitrogen and stirring for 30 minutes, 270 g of 2-ethyl-4-methylimidazole (manufactured by Tokyo Chemical Industry Co., Ltd., "2E4MZ" in the table) was charged in three portions so that the temperature did not exceed 80 °C. Thereafter, the mixture was reacted at 70 °C for 2 hours, 34 g of DABCO TMR was charged, and the mixture was reacted at 60 °C for 1 hour. When the peak of the NCO group (around 2270 $cm^{-1}$) disappeared in the infrared absorption spectrum (IR measurement), the mixture was cooled to room temperature to obtain a composition including a modified blocked polyisocyanate (hereinafter, referred to as "modified blocked polyisocyanate composition (3)"). The solid content concentration of the composition (the content of the modified blocked polyisocyanate) was 75 mass%, and the weight-average molecular weight of the modified blocked polyisocyanate was 1732 g/mol.

(Preparation of Coating Composition)

The coating composition of Example 3 was prepared by mixing 51 g of Acrydic A-801, 19 g of the modified blocked polyisocyanate composition (3), and 30 g of butyl acetate.

(Evaluation)

The curability of the coating composition prepared above and the degree of coloration of the coating film made from the coating composition were evaluated in the same manner as in Example 1. The results are shown in Table 1.

<Example 4>

(Preparation of Modified Blocked Polyisocyanate Composition)

In a four-necked flask equipped with a stirrer, a thermometer, a heating device, a nitrogen seal tube, and a cooling tube, 429 g of polyisocyanate A-1 and 241 g of butyl acetate were charged, and after purging the flask with nitrogen and stirring for 30 minutes, 300 g of 2-phenylimidazole (manufactured by Tokyo Chemical Industry Co., Ltd., "PI" in the table) was charged in three portions so that the temperature did not exceed 80 °C. Thereafter, the mixture was reacted at 70 °C for 2 hours, 34 g of DABCO TMR was charged, and the mixture was reacted at 60 °C for 1 hour. When the peak of the NCO group (around 2270 $cm^{-1}$) disappeared in the infrared absorption spectrum (IR measurement), the mixture was cooled to room temperature to obtain a composition including a modified blocked polyisocyanate (hereinafter, referred to as "modified blocked polyisocyanate composition (4)"). The solid content concentration of the composition (the content of the modified blocked polyisocyanate) was 75 mass%, and the weight-average molecular weight of the modified blocked polyisocyanate was 2015 g/mol.

(Preparation of Coating Composition)

The coating composition of Example 4 was prepared by mixing 49 g of Acrydic A-801, 21 g of the modified blocked polyisocyanate composition (4), and 30 g of butyl acetate.

(Evaluation)

The curability of the coating composition prepared above and the degree of coloration of the coating film made from the coating composition were evaluated in the same manner as in Example 1. The results are shown in Table 1.

<Example 5>

(Preparation of Modified Blocked Polyisocyanate Composition)

In a four-necked flask equipped with a stirrer, a thermometer, a heating device, a nitrogen seal tube, and a cooling tube, 511 g of polyisocyanate A-1 and 217 g of butyl acetate were charged, and after purging the flask with nitrogen and stirring for 30 minutes, 212 g of methyl ethyl ketoxime was charged in three portions so that the temperature did not exceed 80 °C. Thereafter, the mixture was reacted at 70 °C for 2 hours, 60 g of Choline (manufactured by Sigma-Aldrich, a methanol solution of trimethyl(2-hydroxyethyl)ammonium hydroxide, solid content concentration: 45 mass%) was charged, and the mixture was reacted at 60 °C for 1 hour. When the peak of the NCO group (around 2270 $cm^{-1}$) disappeared in the infrared absorption spectrum (IR measurement), the mixture was cooled to room temperature to obtain a composition including a modified blocked polyisocyanate (hereinafter, referred to as "modified blocked polyisocyanate composition (5)"). The solid content concentration of the composition (the content of the modified blocked polyisocyanate) was 75 mass%, and the weight-average molecular weight of the modified blocked polyisocyanate was 1521 g/mol.

(Preparation of Coating Composition)

The coating composition of Example 5 was prepared by mixing 52 g of Acrydic A-801, 19 g of the modified blocked polyisocyanate composition (5), and 29 g of butyl acetate.

(Evaluation)

The curability of the coating composition prepared above and the degree of coloration of the coating film made from the coating composition were evaluated in the same manner as in Example 1. The results are shown in Table 1.

<Example 6>

(Preparation of Modified Blocked Polyisocyanate Composition)

In a four-necked flask equipped with a stirrer, a thermometer, a heating device, a nitrogen seal tube, and a cooling tube, 511 g of polyisocyanate A-1 and 217 g of butyl acetate were charged, and after purging the flask with nitrogen and stirring for 30 minutes, 212 g of methyl ethyl ketoxime was charged in three portions so that the temperature did not exceed 80 °C. Thereafter, the mixture was reacted at 70 °C for 2 hours, 60 g of choline acetate (manufactured by Sigma-Aldrich, a methanol solution of trimethyl(2-hydroxyethyl)ammonium acetate, solid content concentration: 45 mass%) was charged, and the mixture was reacted at 60 °C for 1 hour. When the peak of the NCO group (around 2270 $cm^{-1}$) disappeared in the infrared absorption spectrum (IR measurement), the mixture was cooled to room temperature to obtain a composition including a modified blocked polyisocyanate (hereinafter, referred to as "modified blocked polyisocyanate composition (6)"). The solid content concentration of the composition (the content of the modified blocked polyisocyanate) was 75 mass%, and the weight-average molecular weight of the modified blocked polyisocyanate was 1547 g/mol.

(Preparation of Coating Composition)

The coating composition of Example 6 was prepared by mixing 52 g of Acrydic A-801, 19 g of the modified blocked polyisocyanate composition (6), and 29 g of butyl acetate.

(Evaluation)

The curability of the coating composition prepared above and the degree of coloration of the coating film made from the coating composition were evaluated in the same manner as in Example 1. The results are shown in Table 1.

<Comparative Example 1>

A composition including an unmodified blocked polyisocyanate (hereinafter, referred to as "unmodified blocked polyisocyanate composition (1)") was obtained in the same manner as in Example 1, except that DABCO TMR was not used. The solid content concentration of the composition (the content of the unmodified blocked polyisocyanate) was 75 mass%, and the weight-average molecular weight of the unmodified blocked polyisocyanate was 1401 g/mol. Next, a coating composition was prepared in the same manner as in Example 1, except that the unmodified blocked polyisocyanate composition (1) was used instead of the modified blocked polyisocyanate composition (1). Next, the curability of the obtained coating composition and the degree of coloration of the coating film made from the coating composition were evaluated in the same manner as in Example 1. The results are shown in Table 2.

<Comparative Example 2>

(Preparation of Modified Blocked Polyisocyanate Composition)

In a four-necked flask equipped with a stirrer, a thermometer, a heating device, a nitrogen seal tube, and a cooling tube, 510 g of polyisocyanate A-1 and 26 g of 6-(dimethylamino)-1-hexanol (manufactured by Tokyo Chemical Industry Co., Ltd.) were charged, the flask was purged with nitrogen, and the mixture was heated to a reaction temperature of 80 °C with stirring and reacted at the same temperature for 2 hours. To the obtained reaction solution, 250 g of butyl acetate was charged and stirred for 30 minutes, and then 213 g of methyl ethyl ketoxime was charged in three portions so that the temperature did not exceed 80 °C. Thereafter, the mixture was reacted at 70 °C for 2 hours, and when the peak of the NCO group (around 2270 $cm^{-1}$) disappeared in the infrared absorption spectrum (IR measurement), the mixture was cooled to room temperature to obtain a composition including a modified blocked polyisocyanate (hereinafter, referred to as "modified blocked polyisocyanate composition (7)"). The solid content concentration of the composition (the content of the modified blocked polyisocyanate) was 75 mass%, and the weight-average molecular weight of the modified blocked polyisocyanate was 1540 g/mol.

(Preparation of Coating Composition)

The coating composition of Comparative Example 2 was prepared by mixing 52 g of Acrydic A-801, 19 g of the modified blocked polyisocyanate composition (7), and 29 g of butyl acetate.

(Evaluation)

The curability of the coating composition prepared above and the degree of coloration of the coating film made from the coating composition were evaluated in the same manner as in Example 1. The results are shown in Table 2.

<Comparative Example 3>

A coating composition was prepared in the same manner as in Example 1, except that the unmodified blocked polyisocyanate composition (1) prepared in Comparative Example 1 was used instead of the modified blocked polyisocyanate composition (1), and that DABCO TMR was added as a deblocking catalyst in an amount of 35 g with respect to 504 g of polyisocyanate A-1. Next, the curability of the obtained coating composition was evaluated in the same manner as in Example 1. The results are shown in Table 2.

<Reference Example 1>

A coating composition was prepared in the same manner as in Example 1, except that the unmodified blocked polyisocyanate composition (1) prepared in Comparative Example 1 was used instead of the modified blocked polyisocyanate composition (1), and that trimethyloctylammonium methyl carbonate (manufactured by Tosoh Corporation) was added as a deblocking catalyst in an amount of 5 g with respect to 100 g of polyisocyanate A-1. Next, the curability of the obtained coating composition and the degree of coloration of the coating film made from the coating composition were evaluated in the same manner as in Example 1. The results are shown in Table 2.

[Table 1]

| | Example 1 | Example 2 | Example 3 | Example 4 | Example 5 | Example 6 |
|---|---|---|---|---|---|---|
| Modifier | 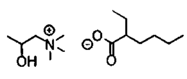 | | | | 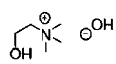 | 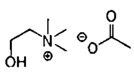 |
| Blocking agent | MEKO | DMP | 2E4MZ | P1 | MEKO | MEKO |
| Martens hardness [N/mm$^2$] | 80 | 100 | 110 | 105 | 100 | 100 |
| Gel fraction [%] | 90 | 95 | 95 | 95 | 95 | 95 |
| Coating film b* [-] | 0.9 | 0.7 | 2.5 | 2.0 | 1.0 | 0.8 |

[Table 2]

| | Comparative Example 1 | Comparative Example 2 | Comparative Example 3 | Reference Example 1 |
|---|---|---|---|---|
| Modifier | - | 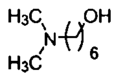 | - | - |
| Blocking agent | MEKO | MEKO | MEKO | MEKO |
| Blocking agent dissociation catalyst | - | - | 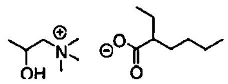 | 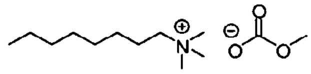 |
| Martens hardness [N/mm$^2$] | 0 | 20 | 65 | 100 |
| Gel fraction [%] | 0 | 5 | 80 | 95 |
| Coating film b* [-] | 0.3 | 1.1 | - | 5.4 |

## Claims

1. A modified blocked polyisocyanate which is a blocked polyisocyanate modified with a hydroxyl group-containing quaternary ammonium salt (I) represented by the following formula (I):

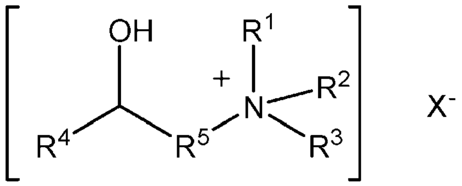 (I)

wherein, in the formula (I), $R^1$ and $R^2$ each independently represent a monovalent hydrocarbon group having 1 to 8 carbon atoms; $R^3$ represents a monovalent hydrocarbon group having 1 to 16 carbon atoms, optionally having an ether group, a thioether group, or a tertiary amino group; any two or three of $R^1$ to $R^3$ may be bonded together to form a ring; $R^4$ represents a hydrogen atom or a monovalent hydrocarbon group having 1 to 8 carbon atoms; $R^5$ represents a divalent hydrocarbon group having 1 to 16 carbon atoms; and $X^-$ represents a monovalent anionic group.

2. The modified blocked polyisocyanate according to claim 1, wherein the $R^1$, the $R^2$, and the $R^3$ each independently are a monovalent hydrocarbon group having 1 to 3 carbon atoms.

3. The modified blocked polyisocyanate according to claim 1 or 2, wherein the anionic group is a fatty acid group having 1 to 12 carbon atoms, a monoalkyl carbonate group having an alkyl group having 1 to 8 carbon atoms, or a hydroxyl group.

4. The modified blocked polyisocyanate according to any one of claims 1 to 3, comprising a structure derived from an aliphatic polyisocyanate having an aliphatic hydrocarbon group having 4 to 6 carbon atoms, or a derivative of the aliphatic polyisocyanate.

5. The modified blocked polyisocyanate according to any one of claims 1 to 4, having at least one group selected from the group consisting of an isocyanate group blocked with an oxime-based blocking agent, an isocyanate group blocked with a pyrazole-based blocking agent, and an isocyanate group blocked with an imidazole-based blocking agent.

6. The modified blocked polyisocyanate according to any one of claims 1 to 5, which is a reaction product of a blocked polyisocyanate having a free isocyanate group and the hydroxyl group-containing quaternary ammonium salt (I), or a derivative of the reaction product.

7. A method for producing the modified blocked polyisocyanate according to any one of claims 1 to 6, the method

comprising:
reacting a blocked polyisocyanate having a free isocyanate group with the hydroxyl group-containing quaternary ammonium salt (I).

**8.** A coating composition comprising a base agent and a curing agent,
wherein the curing agent comprises the modified blocked polyisocyanate according to any one of claims 1 to 6.

**9.** A coating film formed from the coating composition according to claim 8.

**10.** A method for forming a coating film, the method comprising:
applying the coating composition according to claim 8 to a substrate and curing by heating at 100 to 140 °C.

Europäisches Patentamt
European Patent Office
Office européen des brevets

# EUROPEAN SEARCH REPORT

Application Number
EP 25 21 1929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 288 586 A (BOCK MANFRED ET AL) 8 September 1981 (1981-09-08)<br>* column 7, line 48 - line 68; claims 1-12 *<br>* column 8, line 11 - line 43 * | 1-10 | INV.<br>C08G18/73<br>C08G18/79<br>C09D175/04<br>C08G18/06<br>C08G18/28<br>C08G18/62<br>C08G18/80<br>C09D175/14 |
| E | EP 4 678 676 A1 (TOSOH CORP [JP]) 14 January 2026 (2026-01-14)<br>* claims 1-10; example 7; table 1 * | 1-10 | |
| A | WO 2018/079428 A1 (TOSOH CORP [JP]) 3 May 2018 (2018-05-03)<br>* claims 1-16 * | 1-10 | |
| A | US 2010/022707 A1 (SCHAEFER HARALD [DE] ET AL) 28 January 2010 (2010-01-28)<br>* claims 1-16 * | 1-10 | |

TECHNICAL FIELDS SEARCHED (IPC)

C08G
C09D

The present search report has been drawn up for all claims

1

| Place of search | Date of completion of the search | Examiner |
|---|---|---|
| Munich | 24 March 2026 | Scheuer, Sylvie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 21 1929

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2026

| Patent document cited in search report | Publication date | Patent family member(s) | Publication date |
|---|---|---|---|
| US 4288586 A | 08-09-1981 | AT 360975 B | 10-02-1981 |
| | | AU 520103 B2 | 14-01-1982 |
| | | CA 1100501 A | 05-05-1981 |
| | | DE 2806731 A1 | 23-08-1979 |
| | | DK 68479 A | 18-08-1979 |
| | | EP 0003765 A1 | 05-09-1979 |
| | | ES 477801 A1 | 01-08-1979 |
| | | JP S645029 B2 | 27-01-1989 |
| | | JP S54119480 A | 17-09-1979 |
| | | US 4288586 A | 08-09-1981 |
| EP 4678676 A1 | 14-01-2026 | CN 120958053 A | 14-11-2025 |
| | | EP 4678676 A1 | 14-01-2026 |
| | | JP WO2024202500 A1 | 03-10-2024 |
| | | TW 202449003 A | 16-12-2024 |
| | | WO 2024202500 A1 | 03-10-2024 |
| WO 2018079428 A1 | 03-05-2018 | NONE | |
| US 2010022707 A1 | 28-01-2010 | EP 2132244 A1 | 16-12-2009 |
| | | HU E041930 T2 | 28-06-2019 |
| | | JP 5574954 B2 | 20-08-2014 |
| | | JP 2010522715 A | 08-07-2010 |
| | | US 2010022707 A1 | 28-01-2010 |
| | | WO 2008116897 A1 | 02-10-2008 |



For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024193117 A
- JP 2014084426 A
- JP 508 A